# EUROPÄISCHE PATENTSCHRIFT

(11) **EP 0 991 609 B1**
(45) Veröffentlichungstag und Bekanntmachung des Hinweises auf die Patenterteilung: **02.10.2002**
(21) Anmeldenummer: 98930799.6
(22) Anmeldetag: 12.06.1998
(51) Int. Cl.: C04B 35/628, C04B 35/587, B22F 1/00, C30B 1/12

(54) **FORMGEBUNGSMETHODE FÜR KERAMIKEN UND METALLE IN WÄSSRIGEN SYSTEMEN MITTELS TEMPERATURÄNDERUNG**
MOULDING METHOD FOR CERAMICS AND METALS IN AQUEOUS SYSTEMS BY MEANS OF TEMPERATURE VARIATION
PROCEDE DE FACONNAGE POUR CERAMIQUES ET METAUX DANS SYSTEMES AQUEUX PAR VARIATION DE LA TEMPERATURE

(30) Priorität: 12.06.1997 DE 19724922; 05.09.1997 DE 19738910; 21.11.1997 DE 19751696
(43) Veröffentlichungstag der Anmeldung: 12.04.2000
(73) Patentinhaber: Max-Planck-Gesellschaft zur Förderung der Wissenschaften e.V., 80539 München (DE)
(72) Erfinder: ALDINGER, Fritz, D-70771 Leinfelden-Echterdingen (DE); SIGMUND, Wolfgang, D-70563 Stuttgart (DE); YANEZ, Joseph, Nord Huntingdon, PA 15642 (US)
(74) Vertreter: Weiss, Wolfgang, Dipl.-Chem. Dr.
(86) Internationale Anmeldenummer: EP9803555
(87) Internationale Veröffentlichungsnummer: WO98056733

(56) Entgegenhaltungen:
- EP-A- 0 260 577
- EP-A- 0 650 945
- K.R. VENKATACHARI ET AL.: "Dispersion of silicon nitride powders in aqueous media with coupling agents" CERAM. TRANS., Bd. 19, 1991, Seiten 75-82, XP002078637

## Beschreibung

Die vorliegende Erfindung betrifft ein Verfahren zur Herstellung eines festen Formkörpers, insbesondere eines Keramik- oder/und Metallkörpers aus pulverförmigen Teilchen. Weiterhin betrifft die Erfindung stabile Dispersionen pulverförmiger Teilchen in einem wässrigen fluiden Medium, feste Formkörper aus pulverförmigen Teilchen sowie keramische oder/und metallische gesinterte Formkörper.

Hochleistungskeramiken weisen eine Kombination außergewöhnlicher Eigenschaften auf, die in dieser Form von keiner anderen Werkstoffklasse erreicht wird. Zwei Hauptgründe für den bisher noch fehlenden Durchbruch für die Massenfertigung und Anwendung sind bisher der Mangel an kostengünstigen Fertigungsverfahren und die mangelnde Zuverlässigkeit von in Massenfertigung hergestellten Bauteilen (Aldinger, Technische Keramikeine Herausforderung, Keramikzeitschrift 40 (1988), 312). Die Versagenswahrscheinlichkeit keramischer Bauteile ist von den Fehlerpopulationen im Material abhängig (Evans and Wiederhorn, Crack Propagation and Failure Prediction in Si₃N₄ at Elevated Temperatures, J. Mat. Sci. 9 (1974), 270-278). Die meisten Fehler werden in das Bauteil während des Processing und während der Bauteilherstellung eingebracht (Lange, "Powder Processing Science and Technology of Increased Reliabilitiy", J. Am. Ceram. Soc. 72 (1989), 3-15).

In den meisten Standardprozessen der industriellen Keramikfertigung ist die Einführung von großen Fehlern intrinsisch und somit unvermeidbar. So bewirkt beispielsweise das Sprühtrocknen zur Herstellung von schüttfähigem granuliertem Pulver für das Trockenpressen, daß Agglomeratrelikte entstehen, welche die Grundlage für sehr große Fehler in den resultierenden keramischen Bauteilen darstellen. Gleichzeitg bewirken die Variablen der Herstellungsprozesse unterschiedliche Fehlerpopulationen und damit variierende statistische Kennzahlen.

Um diese Fehler zu vermeiden, kann auf eine als "kolloidales Processing" bezeichnete Arbeitstechnik zurückgegriffen werden (vgl. Lange (1989), supra). Dieses kolloidale Processing umfaßt die Arbeitsschritte Herstellung einer flüssigen Dispersion keramischer Teilchen in einem Medium, Filtration zur Entfernung von Verunreinigungen, Zugabe weiterer Mittel zur Fällung der Dispersion, um eine Verfestigung zu erreichen, und anschließende Formgebung.

Spezifische Beispiele solcher Verfahren sind das Direct Coagulation Casting (DCC), das HAS-Verfahren und das Vibraforming. All diesen Verfahren liegt zugrunde, daß in einem wässrigen System durch eine chemische Reaktion die Oberflächenladung von Pulverteilchen verändert wird oder dem System Salze oder weitere Verbindungen zugefügt werden müssen, um es zu verfestigen.

Beim DCC-Verfahren (vgl. z.B. Graule et al., DKG 71 (1994), 317-322; Graule et al., Chemtech 25 (1995), 31-37; Graule et al., Industriel Ceramic 16 (1996), 31-34 und Baader et al., Industrial Ceramics 16 (1996), 36-40) wird die Oberflächenladung von Pulverteilchen durch Zusatz von Zitronensäure stark erhöht, so daß eine Dispersion mit einem hohen Volumenanteil an Pulverteilchen hergestellt werden kann. Weiterhin enthält die Dispersion Harnstoff oder modifizierten Harnstoff, der durch Zusatz des Enzyms Urease zu NH₃ und CO₂ abgebaut wird. Dies hat zur Folge, daß sich der pH Wert der Dispersion erhöht und eine Verfestigung der Dispersion eingeleitet wird. Ein Nachteil dieses Verfahrens ist jedoch, daß die Verfestigung nicht reversibel ist. Falls die Dispersion nicht rechtzeitig in Form gegossen wird, muß die gesamte Schlickermasse entsorgt werden. Ebenso muß der Grünkörper bei einer evtl. Beschädigung entsorgt werden. Ein weiterer Nachteil ist, daß der Grünkörper sehr spröde ist. Darüber hinaus ist das DCC-Verfahren bisher auf Al₂O₃ Keramiken beschränkt. Insbesondere ist es schlecht für nitridische Keramiken oder Mischungen von Keramiken geeignet.

Beim HAS-Verfahren (siehe Patentanmeldung S195 000 73) wird Aluminiumnitrid als Zuschlagsstoff verwendet, das sich im Laufe der Verfestigung in ein Aluminiumoxid umwandelt. Das Verfahren kann daher nur für aluminiumoxidhaltige Keramiken angewandt werden. Auch beim HAS-Verfahren werden brüchige Formkörper geringer mechanischer Festigkeit erhalten, die nicht mehr redispergiert werden können.

Das Vibraforming (Lange, supra) umfaßt eine Einstellung der Kräfte zwischen den Pulverteilchen durch Zusatz von Salzen und weiteren Stoffen, so daß die Masse bei Raumtemperatur fast fest ist und erst durch Vibration aufgrund von Scherkräften verflüssigt wird. Dann wird die Masse unter Druck in eine Form geleitet. Nachteile sind hier der hohe Salzgehalt und die relativ schwierige Handhabung bei der Formgebung. Der hohe Gehalt an Salzen, beispielsweise NH₄Cl, führt dazu, daß beim Ausbrennen giftige Gase wie HCI und Ammoniak freigesetzt werden, oder daß unerwünschte Verbindungen, z.B. Metallchloride, in der Korngrenzphase der resultierenden Keramik vorliegen. Zusätzlich wird der pH der Suspension durch Zersetzung von Harnstoff verändert, um eine vollständige Verfestigung zu erreichen. Auch hier werden nicht mehr redispergierbare brüchige Formkörper geringer mechanischer Festigkeit erhalten.

Ein weiteres Koagulationsverfahren von Bergström (US-A-5,340,532) verwendet organische Lösungsgmittel und benötigt zum Konsolidieren der Keramik eine Erniedrigung der Temperatur.

EP-A-0 260 577 beschreibt ein wasserlösliches Polymer zum Dispergieren eines Pulvers. Die Verfestigung einer Dispersion aus pulverförmigen Teilchen durch Temperaturerhöhung wird nicht offenbart.

WO84/02519 beschreibt ein Verfahren zur Herstellung von Siliciumdioxidglas, bei dem man kolloidales Siliciumdioxid zu einer Sollösung von hydrolysiertem Metalloxid gibt, die mit dem kolloidalen Siliciumdioxid versetzte Sollösung geliert und zu einem trockenen Gel trocknet und das trockene Gel unter Bildung von Siliciumdioxidglas sintert. Die Verfestigung einer Dispersion aus pulverförmigen Teilchen durch Temperaturerhöhung wird nicht offenbart.

DE-A-41 31 335 beschreibt ein Verfahren zur Herstellung von Keramikteilen, wobei eine Dispersion aus pulverförmigem keramischem Rohstoffmaterial hergestellt und vergossen wird, wobei das Rohstoffmaterial in einer aushärtbaren organischen Verbindung, insbesondere einem Kunstharz, zu einer relativ dünnflüssigen Dispersion dispergiert wird, wobei man die Dispersion nach dem Vergießen und vor dem Entformen aushärten läßt, den entformten Grünkörper unter Inertgasatmosphäre glüht und die organische Verbindung in flüchtige Bestandteile und gegebenenfalls verbleibende Bestandteile crackt. Die Verfestigung einer wäßrigen Dispersion mittels Temperaturerhöhung wird nicht offenbart.

DE-A-43 36 694 offenbart ein Verfahren zur Herstellung von Metall- und Keramiksinterkörpern und -schichten, wobei man nanokristallines Keramikoder Metallpulver in Anwesenheit mindestens einer niedrigmolekularen organischen Verbindung, die über mindestens eine funktionelle Gruppe verfügt, welche mit an der Oberfläche der Pulverteilchen vorhandenen Gruppen reagieren oder/und wechselwirken kann, in Wasser und/oder einem polaren organischen Lösungsmittel als Dispergiermedium dispergiert, das Dispergiermedium entfernt und das oberflächenmodifizierte Keramik- oder Metallpulver, das vor oder nach dem Entfernen des Dispergiermediums, z.B. durch Gefriertrocknen oder Gefriersprühtrocknen, zu Grünkörpern oder Schichten verarbeitet worden ist, sintert. Eine Verfestigung der Dispersion durch Erwärmen wird nicht offenbart.

DE-A-44 17 405 beschreibt ein Verfahren zur Herstellung von strukturierten organischen Schichten auf Substraten, wobei man eine Zusammensetzung, die erhältlich ist durch Hydrolyse und Polykondensation von mindestens einem hydrolysierbaren Silan, mindestens einem Organosilan sowie gegebenenfalls einer oder mehreren Verbindungen von glas- bzw. keramikbildenden Elementen auf ein Substrat aufbringt, die aufgetragene Zusammensetzung strukturiert und die strukturierte Beschichtung thermisch zu einer strukturierten Schicht verdichtet. Die Herstellung von Formkörpern durch Verfestigung einer Dispersion aus pulverförmigen Teilchen mittels Temperaturerhöhung wird nicht offenbart.

DE-A-195 40 623 beschreibt ein Verfahren zur Herstellung von Kompositmaterialien mit hohem Grenzflächenanteil, bei dem man einen nanoskaligen Füllstoff in einer polymeren Matrix dispergiert, wobei man der Matrix gegebenenfalls oberflächenmodifizierte Füllstoffteilchen mit Affinität zur Matrixphase und einer Teilchengröße von nicht mehr als 200 nm so einverleibt, daß die Füllstoffteilchen in im wesentlichen agglomeratfreiem Zustand in der Matrixphase verteilt werden. Die Herstellung von Formkörpern durch Verfestigung einer Dispersion aus pulverförmigen Teilchen mittels Temperaturerhöhung wird nicht offenbart.

Das der vorliegenden Erfindung zugrundeliegende Problem bestand somit darin, ein Verfahren bereitzustellen, bei dem die Nachteile des Standes der Technik zumindest teilweise beseitigt sind und das insbesondere ein einfaches und effizientes kolloidales Processing in wässrigem Medium ermöglicht.

Dieses Problem wird gelöst durch ein Verfahren zur Herstellung eines festen Formkörpers aus pulverförmigen Teilchen umfassend die Schritte:
(a) Herstellen einer Dispersion von pulverförmigen Teilchen in einem wässrigen fluiden Medium, wobei die Teilchen einen temperaturabhängigen Ladungszustand aufweisen,
(b) gegebenenfalls Filtrieren der Dispersion zum Entfernen von Verunreinigungen,
(c) Überführen der Dispersion in eine Form,
(d) Erwärmen zur Verfestigung der Masse in der Form,
(e) gegebenenfalls Entnehmen der verfestigten Masse aus der Form und
(f) gegebenenfalls Trocknen der Masse.

Das erfindungsgemäße Verfahren beruht darauf, daß eine Dispersion pulverförmiger Teilchen in einem wäßrigen Medium hergestellt wird, wobei die Teilchen einen temperaturabhängigen Ladungszustand aufweisen. Durch die Erhöhung der Temperatur wird die Ladung der Teilchen in der Dispersion verringert, wodurch es zu einertemperaturgesteuerten Verfestigung kommt. Bisher ging man nur von einer schwachen Temperaturabhängigkeit der Ladungsmenge der Teilchen aus (Intermolecular & Surface Forces, Jacob Israelachvili, Second Edition, Academic Press, Harcourt Brace & Company, Publishers, Seite 176-193). Es war daher überraschend, daß mit dem erfindungsgemäßen Verfahren durch eine kontrollierte Temperaturerhöhung die Ladungsmenge der Teilchen derart beeinflußt werden kann und dadurch der Verfestigungsprozeß gesteuert werden kann.

In einer bevorzugten Ausführungsform ist das Verfahren dadurch gekennzeichnet, daß in Schritt (a) die pulverförmigen Teilchen mit einem Dispergator beschichtet werden.

Hierbei wird eine Dispersion pulverförmiger Teilchen in einem wässrigen Medium hergestellt, der ein Dispergator zugesetzt wird, der ein temperaturabhängiges Löslichkeitsverhalten aufweist und sich an die dispergierten Teilchen anlagert. Als Dispergator kann jedes Molekül verwendet werden, beispielsweise jede organische oder anorganische Verbindung oder lon, das sich an die dispergierten Teilchen anlagern kann. Vorzugsweise verwendet man einen Dispergator, mit dem ein kurzreichweitiges Abstoßungspotential an der Oberfläche eingestellt wird.

Ein kurzreichweitiges Abstoßungspotential wird durch eine mechanische Blockierung des Raumes an der Teilchenoberfläche erreicht. Dies führt dazu, daß die Teilchenoberflächen sich nicht mehr berühren können, sondern nur in einen minimalen Abstand entsprechend der Molekülgröße gelangen können. Dadurch wird das totale Maximum der Anziehungskräfte der Teilchen, das äußerst stark vom Abstand der Teilchen abhängt, vermieden. Solche durch mechanische Abstandshalter verursachten verminderte Anziehungskräfte werden als kurzreichweitiges Abstoßungspotential beschrieben.

Die Beschneidung der maximalen Anziehungskraft durch Abstandshalter erreicht, daß die Teilchen anfangen gegeneinander zu fließen, bevor sie durch eine mechanische Kraft spröde brechen und in viele Bruchstücke zerfallen. Deshalb kann man sie auch als lubrifizierende Kräfte bezeichnen (Schmierkraft).

Der Dispergator umfaßt eine Größe von 0,2 nm bis 10 nm. Besonders bevorzugt enthält der Dispergator eine Ankergruppe zur Anlagerung an die Teilchenoberfläche und eine Stabilisatorgruppe, die bei der zum Dispergieren verwendeten Temperatur eine Stabilisierung in Wasser bewirkt. Der Dispergator kann eine oder mehrere Ankergruppen zur Anlagerung an die Partikeloberfläche aufweisen, wobei diese Anlagerung beispielsweise eine chemische Bindung oder/und eine physikalische Adsorption sein kann. Bei einer chemischen Bindung reicht das Vorhandensein einer Ankergruppe aus, während bei einer physikalischen Adsorption vorzugsweise mehrere Ankergruppen vorhanden sind. Die Stabilisatorgruppe ist vorzugsweise eine hydrophile organische Kette, die sich wie eine Ziehharmonika verhält. Eine solche Kette ist bei einer niedrigen Temperatur, z.B. Raumtemperatur, ausgestreckt und zieht sich mit steigender Temperatur zusammen. Pulverpartikeln, an deren Oberfläche ein Dispergator angelagert ist, wird bei einer milden Temperaturerhöhung eine kontrollierte Annäherung erlaubt. Somit wird der Annäherungsprozeß der Teilchen und damit die Verfestigung in synergistischer Weise durch die Ladung der Teilchen und die sterischen Eigenschaften der Stabilisatorgruppe temperaturabhängig kontrolliert. Dies führt zu einer kontrollierten Steigerung der anziehenden Kräfte (van-der-Waals Kräfte) und zu einer homogenen und schnellen Verfestigung der Dispersion.

Die Anlagerung des Dispergators an die Pulverteilchen kann durch Zusatz des Dispergators zu einer Dispersion der pulverförmigen Teilchen in einem wässrigen Medium erfolgen. Andererseits kann der Dispergator auch unter wasserfreien Bedingungen an die Oberfläche der Pulverteilchen angelagert werden. Diese Vorgehensweise ist insbesondere bei gegenüber Feuchtigkeit oder/und Sauerstoff empfindlichen Teilchen wie etwa nitridischen Keramikteilchen bevorzugt. Das erfindungsgemäße Verfahren erlaubt es daher, die Beschichtung der pulverförmigen Teilchen von der Formgebung zu trennen, sofern dies gewünscht wird. So kann die Beschichtung der Teilchen bereits durch den Pulverhersteller erfolgen, der die beschichteten Teilchen an den Hersteller des Formkörpers liefert. Andererseits können natürlich die Beschichtung und die Formgebung in einem einzelnen Arbeitsgang durchgeführt werden.

Das erfindungsgemäße Verfahren erlaubt das Arbeiten in einem umweltfreundlichen wässrigen Medium, d.h. in einem mindestens 50 Gew.-% Wasser enthaltenden Medium. Vorzugsweise enthält das Medium mindestens 70 Gew.-% Wasser und am meisten bevorzugt besteht das Medium im wesentlichen aus Wasser. Durch Verwendung wässriger Medien vereinfacht sich das Dispergieren der pulverförmigen Teilchen, welches vorzugsweise durch Einwirkung von Scherkräften, beispielsweise durch Mahlen z.B. in einer Kugelmühle unterstützt wird. In wässrigen Medien findet man eine starke Reduzierung der Mahlzeiten (10% der für organischen Medien benötigten Zeit), einen höheren Energieeintrag als in organischen Lösungsmitteln und einen geringeren Sauerstoffeintrag, was beispielsweise für nitridische oder carbidische Keramikpulver von Bedeutung sein kann.

Das erfindungsgemäße Verfahren, welches eine Verfestigung einer Pulvermasse durch Temperaturerhöhung in einem wässrigen Medium unter Verwendung geeigneter Dispergatoren umfaßt, ist universell für beliebige pulverförmige Teilchen anwendbar, z.B. für Keramiken, Lacke, Metalle, pharmazeutische Substanzen und Pigmente. Vorzugsweise werden die pulverförmigen Teilchen jedoch aus anorganischen Teilchen wie Keramik- oder/und Metallteilchen ausgewählt. Am meisten bevorzugt sind keramische Teilchen. Alle Arten von carbidischen, nitridischen und oxidischen Materialien, z.B. Hartstoffe, Metalloxide oder Keramiken auf Basis von Si₃N₄, Al₂O₃, TiO₂, SiC oder ZrO₂ oder auch Mischungen unterschiedlicher Teilchen können verarbeitet werden.

Vorzugsweise werden solche Teilchen verwendet, die bei steigender Temperatur eine Zunahme der Löslichkeit von Materialien aus den Teilchen, z.B. Metallionen, aufweisen. Diese Löslichkeitszunahme erhöht den Salzgehalt in der Dispersion und trägt zur Verfestigung durch Koagulation bei.

Weiterhin ist bevorzugt, daß sich bei Zunahme der Löslichkeit von Materialien aus den Teilchen der pH-Wert des Systems ändert. Dies trägt auch zur Konsolidierung bei. Besonders bevorzugt erfolgt eine pH-Änderung in Richtung auf den isoelektrischen Punkt der Pulverteilchen.

Der Dispergator wird den pulverförmigen Teilchen im allgemeinen in sehr geringen Mengen zugesetzt. So kann der Dispergator in einer Menge eingesetzt werden, die ausreicht, um die Oberfläche der pulverförmigen Teilchen mit einer Monoschicht des Dispergators zu überziehen. Vorzugsweise wird der Dispergator in einem Anteil von 0,0001 bis 5 Gew.-% bezogen auf das Gewicht der pulverförmigen Teilchen verwendet. Besonders bevorzugt wird der Dispergator in einem Anteil von 0,001 bis 2,5 Gew.-% und am meisten bevorzugt in einem Anteil von 0,01 bis 1,5 Gew.-% verwendet.

Eine Wirkung des Dispergators besteht darin, daß er als Abstandshalter dient, um bei geringen Temperaturen eine Flokkulierung der Dispersion aufgrund direkter Berührung der Partikel zu vermeiden. Darüber hinaus kann er auch noch die Funktion der Einstellung des isoelektrischen Punkts der Dispersion übernehmen, um einen zusätzlichen Beitrag zur Verfestigung zu leisten. Beispielsweise kann durch die Menge der Zugabe von Zitronensäure oder Zitronensäuresalzen als Dispergator zu Aluminiumoxidteilchen in Wasser der isoelektrische Punkt einer Aluminiumoxiddispersion zwischen pH 9 (keine Zitronensäure) und pH 3 beliebig eingestellt werden.

In einer weiteren bevorzugten Ausführungsform wird das erfindungsgemäße Verfahren in Anwesenheit einer oder mehrerer anorganischen haftvermittelnden Substanzen durchgeführt. Dabei handelt es sich um gelöste anorganische Materialien, die in der Teilchendispersion anwesend sind, und bei der Verfestigung oder/und beim Eintrocknen der Dispersion vorzugsweise an den Berührungspunkten zwischen den Teilchen abgeschieden werden. Durch diese ortsspezifische Abscheidung wird bei minimaler Menge des anorganischen Haftvermittlers eine maximale Steigerung der Festigkeit des Grünkörpers erreicht. Vorzugsweise wird ein anorganischer Haftvermittler verwendet, dessen Löslichkeit temperatur- oder/und druckabhängig ist.

Ein bevorzugter anorganischer Haftvermittler insbesondere bei siliciumhaltigen keramischen Pulvern ist SiO₂, welches in einem wässrigen Medium von der Oberfläche keramischer Teilchen gelöst und - wie zuvor ausgeführt - bei der anschließenden Verfestigung oder/und Eintrocknung wieder abgeschieden wird. Insbesondere bei der erfindungsgemäßen Temperaturerhöhung findet man eine vermehrte Lösung von SiO₂, wodurch aufgrund der anschließenden Wiederabscheidung die Grünfestigkeit der keramischen Körper automatisch gesteigert wird.

Darüber hinaus kann durch zusätzliche Maßnahmen die Konzentration des gelösten anorganischen Haftvermittlers in der Dispersion weiter erhöht werden. So kann durch Auslaugung des Keramikpulvers, z.B. bei Einstellung eines sauren pH-Werts, der Gehalt an gelöstem SiO₂ gesteigert werden. Zusätzlich oder/und alternativ kann lösliches SiO₂ zugesetzt werden.

Für Keramikpulver, die keine lösliche Siliziumoberfläche enthalten, bzw. bei denen SiO₂ nicht enthalten sein darf, können andere lösliche anorganische Verbindungen als Haftvermittler gewählt werden, z.B. Aluminiumhydroxid, Yttriumhydroxid oder ähnliche Verbindungen.

Falls der Zusatz der löslichen Verbindungen zu Problemen bei der Pulveraufbereitung führen sollte, können die haftvermittelnden Substanzen in Mikrokapseln verpackt werden. Diese Kapseln sind so ausgestaltet, daß sie beim Erwärmen der Masse zur Verfestigung oder/und während der Trocknung zerstört werden können und dabei der anorganische Haftvermittler freigesetzt wird.

Vorzugsweise wird der anorganische Haftvermittler in einem Anteil von 0,00 00 1 Gew.-% bis 5 Gew.-% bezogen auf das Gewicht des Keramikpulvers verwendet. Besonders bevorzugt werden von 0,00 01 Gew.-% bis 1 Gew.-% und am meisten bevorzugt zwischen 0,00 5 Gew.-% und 0,1 Gew.-% verwendet.

In einer bevorzugten Ausführungsform verwendet man in Schritt (a) anisotrope pulverförmige Teilchen. Beispielsweise haben keramische pulverförmige Teilchen und im besonderen solche, deren Oberflächen aufgrund ihres kristallinen Charakters anisotrop sind, anisotrope Kraft-Abstandskurven. Es war überraschend, daß durch Einstellen geeigneter Temperaturen die Kräfte zwischen den unterschiedlichen Oberflächen von pulverförmigen Teilchen so eingestellt werden können, daß man die Teilchen kristallographisch orientiert ausrichten kann. Dadurch lassen sich große hochgeordnete kristallographisch orientierte Bereiche herstellen, die eine nach dem Sintern in gezielte stark texturierte polykristalline Materialien bis hin zu höchst geordneten polykristallinen Materialien und sogar Einkristalle überführt werden können. Mit dem erfindungsgmäßen Verfahren wird es somit möglich, auf einfache Weise kostengünstig komplex geformte kristallographisch orientierte Materialien sowie Einkristalle zu erhalten. Die Kombination von geeigneten pulverförmigen Teilchen und Dispergatoren sowie die zur kristallographischen Ausrichtung der Teilchen notwendige Verfahrenstemperatur kann ein Fachmann durch einfache Versuche leicht bestimmen.

Darüber hinaus muß kein Bindemittel zugesetzt werden, da durch das erfindungsgemäße Verfahren nach der Verfestigung ein elastischer, wasserhaltiger Formkörper erhalten wird, aus dem nach einer gegebenenfalls erfolgenden Trocknung ein gut handhabbarer spröder Grünkörper resultiert.

In bestimmten Ausführungsformen der vorliegenden Erfindung können der Dispersion gegebenenfalls wasserlösliche Polymere, vorzugsweise in einer Menge von 0,01 bis 10 Gew.-% und besonders bevorzugt von 0,01 bis 5 Gew.-% bezüglich des Gewichts der Dispersion zugesetzt werden. Beispiele für geeignete wasserlösliche Polymere sind Polyvinylalkohol, Stärke, modifizierte Stärke, Polyethylenoxid, Polyvinylpyrrolidon, Polyoxymethylen, siliciumorganische Polymere wie etwa Siloxane oder Mischungen davon. Bei Verwendung solcher wasserlöslicher Polymere muß bei einer anschließenden Sinterung des Formkörper ein vorheriges Ausbrennen erfolgen.

Die pulverförmigen Teilchen in der Dispersion haben vorzugsweise einen mittleren Durchmesser < 5 µm, besonders bevorzugt < 2 µm. Das Erreichen einer solchen Größe kann entweder durch Verwendung von Ausgangsmaterialien der entsprechenden Größe oder/und durch unterstützendes Mahlen, z.B. mit einer Kugelmühle, während des Dispergierens erfolgen.

Vorzugsweise umfaßt das erfindungsgemäße Verfahren einen Filtrationsschritt zum Entfernen von Verunreinigungen. Dieser Filtrationsschritt findet zweckmäßigerweise bei einer Temperatur statt, bei der die Dispersion dünnflüssig ist. Bei dieser Filtration werden feine Filter verwendet, um Verunreinigungen > 5 µm und besonders bevorzugt > 2 µm zu entfernen. Auf diese Weise kann bei Keramiken eine Steigerung des Weibull-Moduls nach der Sinterung erreicht werden.

Der im erfindungsgemäßen Verfahren verwendete Dispergator weist vorzugsweise die allgemeine Formel (I) auf:

A-R (I)

worin
- A: eine oder mehrere Ankergruppen bedeutet, die zur Anlagerung, z.B. zur chemischen Bindung oder/und zur physikalischen Adsorption, an die Oberfläche von Teilchen, z.B. von Keramik- oder/und Metallteilchen, fähig sind,
- R: eine oder mehrere Stabilisatorgruppen bedeutet, die eine temperatur-abhängige Löslichkeit, vorzugsweise eine mit steigender Temperatur abnehmende Löslichkeit in einem wässrigen Medium aufweist.

A ist vorzugsweise eine Gruppe ausgewählt aus -OH, -I, -SO₃H, -PO₃H₂, Aldehyd, Tosylat, Epoxid und einer Silicium-enthaltenden Gruppe. Vorzugsweise ist A eine Silicium-enthaltende Gruppe, z.B. eine Silangruppe. Ein Beispiel für einen geeigneten Dispergator mit einer Silicium-enthaltenden Ankergruppe ist eine Verbindung der allgemeinen Formel (II):

SiXYZ-R (II)

worin
- R: wie zuvor definiert ist, und
- X,Yund Z: Substituenten an Si bedeuten, die vorzugsweise jeweils unabhängig ausgewählt sind aus H, Halogen, insbesondere Cl oder Br, OH, OR¹ und R¹, wobei R¹ ein gegebenenfalls substitutierter (beispielsweise durch Halogen oder Heteroatome wie etwa O, N oder S enthaltende Gruppen) Alkyl-, Alkenyl- oder Alkinylrest ist, der vorzugsweise 1 bis 10, besonders bevorzugt 1 bis 6 C-Atome aufweist, mit der Maßgabe, daß mindestens einer der Substituenten an Si von R¹ verschieden ist.

Darüber hinaus sind auch höhere Homologe von Verbindungen der Formel (II) geeignet, d.h. Dimere, Trimere oder Oligomere, die über -O-Brücken verknüpfte Si-Atome enthalten und linear oder verzweigt sein können. Ein Beispiel hierfür sind Verbindungen der allgemeinen Formel (III):

R-Si(XY)-O-Si(R)(XY) (III)

worin
- R, X und Y: wie zuvor definiert sind.

Darüber hinaus sind selbstverständlich auch siliciumfreie Ankergruppen geeignet, sofern sie unter den bei der Dispergierung herrschenden Bedingungen ausreichend an den pulverförmigen Teilchen haften. Beispiele für solche Verbindungen sind etwa R-CH₂-OH, R-CH₂-Tosylat, R-CH₂-I oder Epoxide und dies ebenfalls als monomere oder als oligomere Verbindungen.

Die Stabilisatorgruppe R ist vorzugsweise eine Gruppe, die mindestens zwei C₂-C₄-Alkylenoxideinheiten umfaßt. Besonders bevorzugt ist die Stabilisatorgruppe eine Kette, die aus Ethylenoxideinheiten, Propylenoxideinheiten oder Mischungen davon aufgebaut ist und mindestens zwei Einheiten umfaßt. Weiterhin kann die Stabilisatorgruppe R eine oder mehrere Gruppen enthalten, die protoniert oder/und deprotoniert werden können, d.h. Brönsted-Säure- oder/und Brönsted-Basengruppen. Beispiele für solche Säure- oder/und Basengruppen sind -NR²-, -NR²-CO-, -N(R²)₂, - CO-N(R²)₂und COOR³ Gruppen, worin R² H oder einen gegebenenfalls substituierten Alkyl-, Alkenyl- oder Alkinylrest (wie oben definiert) bedeutet, und R³ H oder ein Metall- oder ein Ammoniumkation bedeutet.

Schritt (c) des erfindungsgemäßen Verfahrens umfaßt das Überführen der Dispersion in eine Form. Dieses Überführen kann auf jede bekannte Art und Weise erfolgen, z.B. durch Gießen. Dabei kann das Gießen in eine zum weiteren Umformen bestimmte Vorform, z.B. einen Block, eine Platte oder einen Strang erfolgen. Andererseits kann das Gießen auch in Formen mit vorgegebener, gegebenenfalls komplexer Gestalt erfolgen, bei denen keine oder nur geringe Nachbearbeitung erforderlich ist. Ein besonderer Vorteil des erfindungsgemäßen Verfahrens ist, daß für das Gießen - im Gegensatz zum bisher üblichen Schlickerguß - eine nichtporöse Form verwendet werden kann, da die Konsolidierung nicht durch Entzug des Wassers durch eine poröse Wand erforderlich ist. Dies bewirkt, daß keine Inhomogenitäten durch Scherbenbildung, wie sonst beim Schlieckergießen üblich, auftritt. Techniken, die durch das erfindungsgemäße Verfahren vereinfacht werden können, sind beispielsweise aufbauendes Foliengießen. Es kann immer gegossen und anschließend im Siebdruck gedruckt werden. Die Töpfertechnick und die gesamte Herstellung von konventionellen Keramiken (Waschbecken, Teller etc.) kann für die Formgebung eingesetzt werden, da bei Temperaturen oberhalb der Raumtemperatur die feuchte Masse plastisch verarbeitet werden kann. Darüber hinaus können Techniken wie Strangpressen oder Spritzgießen eingesetzt werden.

Schritt (d) des erfindungsgemäßen Verfahrens umfaßt ein Erwärmen zur Verfestigung der Masse in der Form. Dieses Erwärmen wird vorzugsweise so durchgeführt, daß eine Erhöhung der Viskosität der Dispersion um mindestens den Faktor 10³, besonders bevorzugt um mindestens den Faktor 10⁴ erfolgt. Das Erwärmen kann eine Temperaturerhöhung um 20 bis 95°C, vorzugsweise um 20 bis 70°C umfassen, beispielsweise von Raumtemperatur (25°C) auf 50 bis 95°C. Durch den Erwärmungsvorgang verfestigt sich die Dispersion und es wird ein wasserhaltiger, mechanisch stabiler und elastischer Formkörper erhalten, der ohne weiteres aus der Form entnommen werden kann. Eine vorherige Entfernung des Wassers ist nicht erforderlich.

Anschließend kann der resultierende Formkörper gegebenenfalls getrocknet und gesintert werden. Die Trocknung kann einfach und schnell durch bekannte Methoden, z.B. in einem Wärmeschrank, erfolgen. Das Sintern kann ohne vorheriges Ausbrennen direkt erfolgen, da nur geringe Mengen des Dispergators (z.B. 0,4 Gew.-%) verwendet werden müssen.

Ein weiterer Gegenstand der vorliegenden Erfindung ist eine Dispersion von pulverförmigen Teilchen, vorzugsweise von Teilchen mit einem mittleren Durchmesser < 2 µm, in einem wässrigen fluiden Medium, die in einem Anteil von 0,0001 bis 5 Gew.-% bezogen auf das Gewischt der pulverförmigen Teilchen einen Dispergator enthält, der an der Oberfläche der Teilchen angelagert ist und ein temperaturabhängiges Löslichkeitsverhalten aufweist. Die erfindungsgemäße Dispersion ist aufgrund des Zusatzes des Dispergators über einen längeren Zeitraum stabil und zwar sowohl hinsichtlich einer Sedimentation als auch hinsichtlich chemischer Veränderungen, z.B. Oxidation. Selbst nach einem Eintrocknen kann die Masse ohne weiteres redispergiert werden. Weiterhin kann die erfindungsgemäße Dispersion mindestens einen anorganischen Haftvermittler enthalten.

Noch ein weiterer Gegenstand der vorliegenden Erfindung ist ein fester grüner Formkörper aus pulverförmigen Teilchen erhältlich durch ein Verfahren wie oben angegeben, wobei dieser Formkörper aus Teilchen besteht, an deren Oberfläche ein Dispergator angelagert ist, der ein temperaturabhängiges Löslichkeitsverhalten in einem wässrigen Medium aufweist. Noch ein weiterer Gegenstand der vorliegenden Erfindung ist ein fester grüner Formkörper aus pulverförmigen Teilchen, erhältlich durch ein Verfahren wie oben angegeben, wobei dieser Formkörper kristallograhpisch orientierte anisotrope polykristalline Bereiche aufweist. in einem erfindungsgemäßen Formkörper kann somit durch die Wahl der Temperatur nicht nur das Packungsverhalten im Grünzustand eingestellt werden, sondern darüber hinaus auch die kristallographische Orientierung der Teilchen und eine definierte Textur in dem Formkörper. Besonders bevorzugt weist der Formkörper im wesentlichen anisotrope Struktur auf. Der Anteil des Dispergators bezüglich der Pulverteilchen ist vorzugsweise 0,0001 bis 2,5 Gew.-% und besonders bevorzugt 0,001 bis 1,5 Gew.-%. Der Formkörper weist weiterhin vorzugsweise eine Dichte von 40 bis 70 Vol.-% bezüglich der theoretisch erreichbaren Dichte auf. Der erfindungsgemäße Formkörper ist im wesentlichen frei von Dichtegradienten und kann redispergiert werden. Weiterhin ist der Formkörper vorzugsweise im wesentlichen frei von Salzen wie NH₄Cl, d.h. er enthält weniger als 1 Gew.-% und insbesondere weniger als 0,5 Gew.-% Salze.

Noch ein weiterer Gegenstand der vorliegenden Erfindung ist ein keramischer oder/und metallischer gesinterter Formkörper erhältlich durch das erfindungsgemäße Verfahren mit anschließender Sinterung. Noch ein weiterer Gegenstand der vorliegenden Erfindung ist ein hochgeordneter kristallographisch orientierter anisotroper polykristalliner Formkörper erhältlich durch das erfindungsgemäße Verfahren mit anschließender Sinterung. Dieser kann auch sehr dünn sein. Somit wird es auch für keramische Folien möglich, die Hauptrichtung der kristallographischen Orientierung in gewünschter Weise festzulegen und nicht nur wie bisher Textureffekte in Gießrichtung zu erhalten. Schließlich noch ein weiterer Gegenstand der vorliegenden Erfindung ist ein einkristalliner Formkörper erhältlich durch das erfindungsgemäße Verfahren mit anschließender Sinterung. Der erfindungsgemäße Sinterkörper weist eine höhere Homogenität als ein Sinterkörper auf, der durch Schlickerguß und anschließende Sinterung hergestellt wurde. Weiterhin enthält der erfindungsgemäße Sinterkörper geringere Rückstände an unerwünschten Substanzen als ein Sinterkörper des Standes der Technik, die durch bisherige Koagulationsverfahren hergestellt wurde, da neben dem Dispergator, der nur in sehr geringen Mengen eingesetzt werden kann, keine weiteren möglicherweise zu Verbrennungsrückständen führenden Substanzen der Dispersion zugesetzt werden müssen.

Mit dem erfindungsgemäßen Verfahren wird es möglich, polykristalline Materialien mit definierter Textur sowie komplexe Formen von Einkristallen herzustellen, die bisher nur mit aufwendigen Verfahren zu erhalten waren. Erfindungsgemäße texturierte Polykristalline Systeme oder Einkristalle können beispielsweise als Supraleiter, lonenleiter oder Elektronenleiter, z.B. Brennstoffzellen oder Stromkabel, verwendet werden.

Weiterhin soll die vorliegende Erfindung durch die nachfolgenden Beispiele und Abbildungen erläutert werden. Es zeigen:
- Abb. 1: das Ergebnis einer Rheologiemessung an einer Dispergatorbeschichteten Si₃N₄-Dispersion in Abhängigkeit von der Temperatur,
- Abb. 2: ein Infrarotspektrum von Si₃N₄-Pulver,
- Abb. 3: ein Infrarotspektrum eines Dispergator-beschichteten Si₃N₄- Pulvers,
- Abb. 4: die Ladung (Zeta-Potential) von Si₃N₄-Pulver in Abhängigkeit des pH-Werts für 25°C und 49°C,
- Abb. 5: Kraft-Abstandskurven von Si₃N₄-Pulver beschichtet mit Polyethylenoxidsilan in Abhängigkeit der Temperatur und
- Abb. 6: eine ellipsometrische Untersuchung der Adsorption von Polyacrylsäure an SrTiO₃-Einkristallgrenzflächen der kristallographischen Grenzflächen (100), (110), (111). Die Zugabe einer Lösung mit Polyacrylsäure erfolgt zum Zeitpunkt tₒ.

### Beispiel 1

Die im folgenden beschriebenen Experimente wurden an Si₃N₄ Keramikpulverund einem Polyethylenoxid-Silan-Dispergator (N-Triethoxysilylpropyl)-Opolyethylenoxiduret (kommerziell von ABCR Karlsruhe, Deutschland unter der Katalognummer SIT 8192.0 erhältlich) durchgeführt. Entsprechende Ergebnisse wurden mit einem N-2 (Aminoethyl-3-aminopropyl)-trimethoxysilan-Dispergator erhalten.

### Rheologie

Das Fließverhalten einer Masse aus 20 Vol.-% Si₃N₄ Puiver und 1,5 Gew.-% PEO-Silan wurde untersucht. Die Rheologiekurve zeigte deutlich die Abhängigkeit des Fließverhaltens von der Temperatur. Bei einer Temperaturerhöhung von 25°C auf 60°C stieg die Viskosität um 5 Größenordnungen an. Bei erhöhter Menge an Pulver (> 20 Vol.-%) wurde die Masse bei 60°C fest.

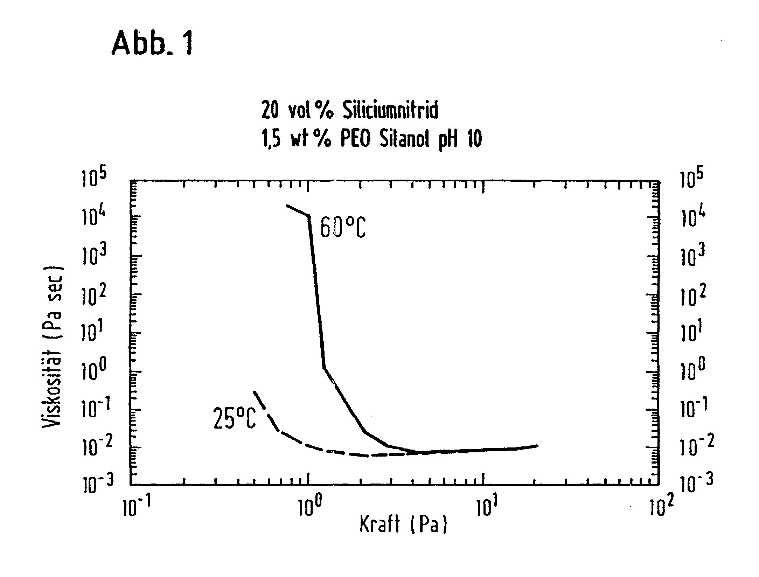

Es wurde ein Constant Stress-Rheometer SR500 der Fa. Rheometrics verwendet. Die Meßgeometrie wird als konischer Zylinder bezeichnet. Die Ergebnisse der Rheologiebestimmung sind in Abbildung 1 gezeigt.

### Anlagerung des Dispergators an die Partikeloberfläche

Der Nachweis der Anlagerung des Dispergators an die Partikeloberfläche wurde mittels DRIFT (diffuse Reflexionsinfrarotspektroskopie) durchgeführt. Trotz mehrfachen intensiven Waschens konnte der Dispergator nicht von der Pulveroberfläche entfernt werden.

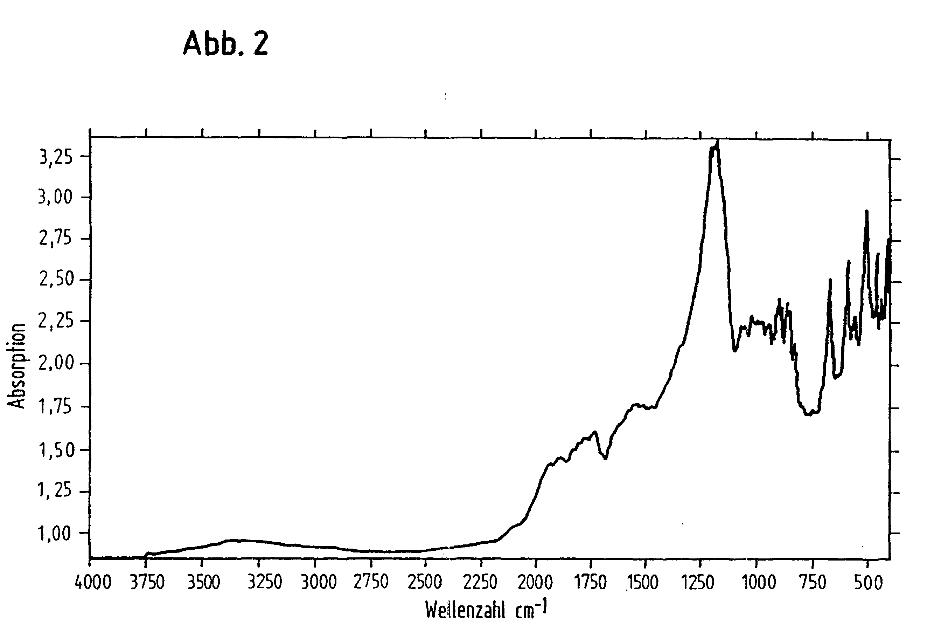

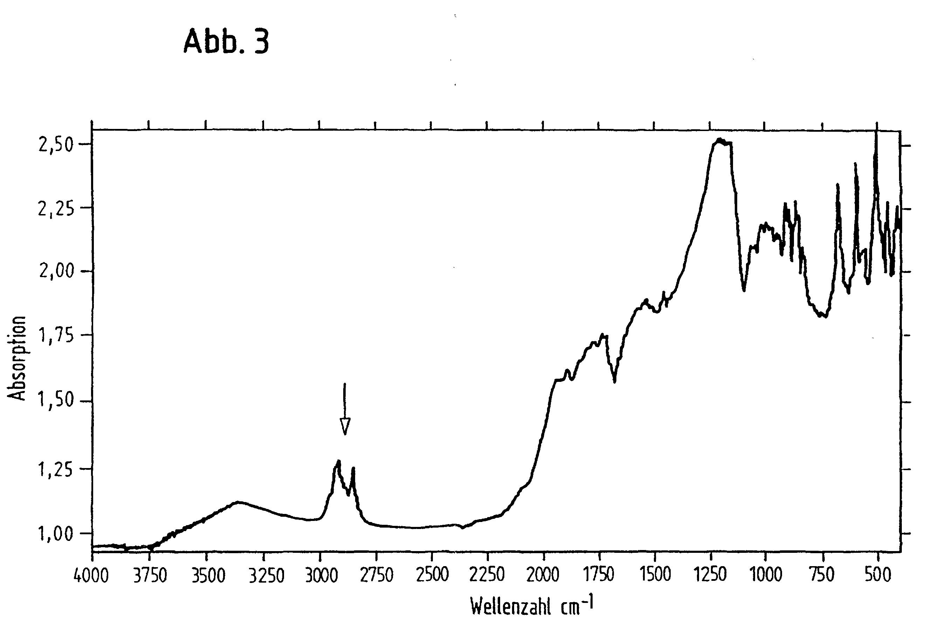

Abbildung 2 zeigt das DRIFT Spektrum eines reinen Si₃N₄ Pulvers. Abbildung 3 zeigt das Spektrum eines mit PEO-Silan beschichteten Pulvers. Hier sind im Bereich von 2800 bis 3000 cm⁻¹ zusätzliche Peaks zu erkennen, die durch die Anwesenheit des Silans hervorgerufen werden.

### Zeta-Potentialmessung

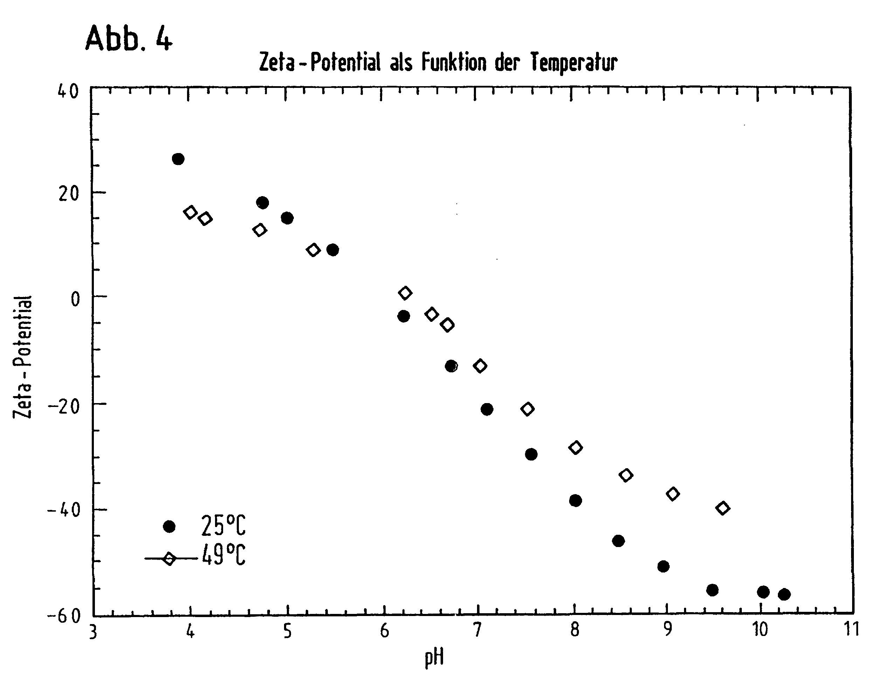

Für Si₃N₄-Pulver wurde das Zeta-Potential in Abhängigkeit des pH-Wertes für 25°C und 49°C gemessen. Man erkennt deutlich, daß sich bei einer Temperaturerhöhung von 25°C auf 49°C das Zeta-Potential bei pH 9,5 von 57 mV auf -40 mV reduziert. Bei weiterer Erhöhung der Temperatur sinkt die Aufladung und somit das Zeta-Potential weiter ab. Die Abnahme des Zeta-Potentials führt zu einer Verringerung der abstoßenden Kräfte und zur Ausbildung von anziehenden Kräften. Dieser Sachverhalt wird durch die Messung der Kraft-Abstandskurven deutlich (vgl. Abbildung 4).

### Messung der Kraft-Abstandskurven

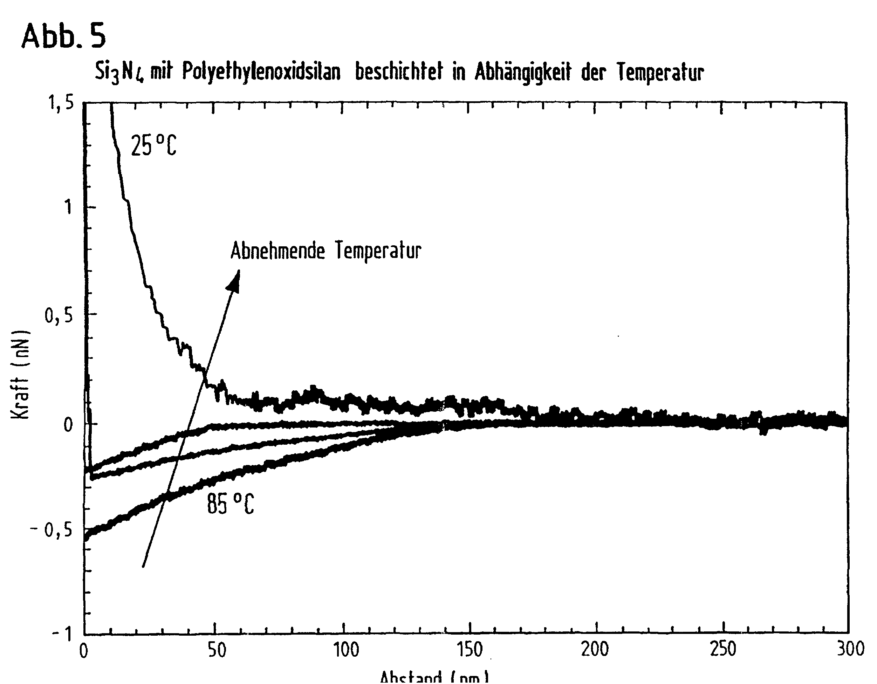

In Abbildung 5 ist die Messung der Kraft-Abstandskurven mit dem Rasterkraftmikroskop von mit Polyethylenoxidsilan beschichtetem Si₃N₄ dargestellt. Hierbei wurde eine Si₃N₄ Spitze mit einer flachen Si₃N₄ Schicht in Kontakt gebracht und die Kraft zwischen diesen beiden Oberflächen in Wasser bei pH 10 gemessen. Bei 25°C wurden ausschließlich abstoßende Kräfte gemessen, wohingegen bei 85°C stark anziehende Kräfte gemessen wurden. Durch Temperaturerhöhung kann eine Abnahme von abstoßenden bzw. eine Zunahme von anziehenden Kräften erreicht werden.

Die Messungen des Zeta-Potentials und der Kraftabstandskurven zeigen deutlich die Abhängigkeit der Ladung der pulverförmigen Teilchen von der Temperatur und die daraus resultierenden zwischen den Teilchen wirksamen Kräfte. Mit dem erfindungsgemäßen Verfahren wird eine Verringerung der abstoßenden Kräfte zwischen den Teilchen erreicht und eine homogene und schnelle Verfestigung der Dispersion wird möglich.

Durch die homogene Umwandlung der Kräfte von Abstoßung zu Anziehung wird eine Erhöhung der Anzahl nächster Nachbarn der Teilchen erreicht, was den Formkörper mechanisch stabiler werden läßt.

### Ellipsometrische Untersuchung der Adsorption von Polvacrylsäure an SrTiO₃-Einkristallgrenzflächen

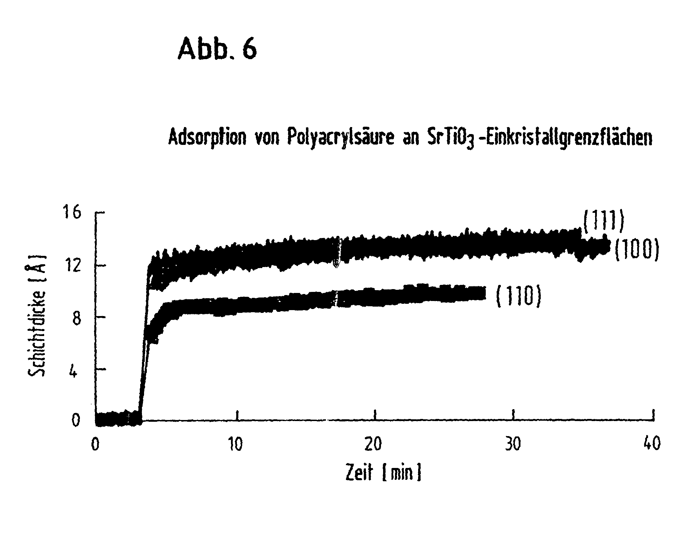

In Abbildung 6 ist die unterschiedlich starke Adsorption von Polyacrylsäure an SrTiO₃ Oberflächen 100, 110 und 111 dargestellt. Die unterschiedlich starke Adsorption der Polyacrylsäure an die SrTiO₃-Einkristallgrenzflächen führt zu unterschiedlichen Kräften zwischen zwei Teilchen. Durch Einstellen der Temperatur gemäß dem Verfahren der Erfindung können die Ladungen an den verschiedenen Grenzflächen und somit die an ihnen wirksamen Kräfte so eingestellt werden, daß sich bestimmte Grenzflächen anziehen bzw. abstoßen. Dadurch kann die Orientierung und Ausrichtung der Teilchen eingestellt werden und komplexe Formen mit definierter Textur bis hin zu Einkristallen können auf einfache Weise hergestellt werden.

### Formgebung

Es wurde eine Schlickermasse von 20 Vol.-% Si₃N₄ in Wasser mit 1,5% Dispergator (PEO-Silan) angesetzt. Die Masse wurde anschließend zentrifugiert und das überstehende Wasser abgegossen. Die resultierende Masse enthält 40 Vol.-%. Si₃N₄ mit 1,5% Dispergator. Die Masse wurde in eine nichtporöse komplexe Kunststofform gegossen und für 5 Minuten in einem Wärmeschrank bei 60°C aufbewahrt. Anschließend konnte der elastische, komplex aufgebaute Grünkörper leicht aus der Form entnommen werden. Bei anschließender Trocknung an Luft verlor der Grünkörper seine Elastizität. Er blieb jedoch genügend mechanisch stabil, um eine Weiterverarbeitung ohne Probleme zu ermöglichen.

Eine Bestimmung der Grünkörperdichte ergab 55 Vol.-%. Dieser Wert wurde auch bei verschiedenen anderen Volumenanteilen von Si₃N₄ in der Ausgangsdispersion erhalten.

Bei Verwendung einer Schlickermasse von Si₃N₄ unter Zusatz von 8% Sinteradditiven (4 % Al₂O₃ und 4 % Y₂O₃) wurden analoge Ergebnisse wie für Si₃N₄ erhalten.

### Beispiel 2

Es wurde das α-Aluminiumoxidpulver CS-400 (Martinswerk, Deutschland) verwendet. Bei der Herstellung dieses Pulvers wird während des Mahlens Zitronensäure zugesetzt. Aufgrund des Vorhandenseins restlicher Zitronensäure (ca. 2,9 x 10⁴ Gew.-%) weist das Pulver einen isoelektrischen Punkt bei einem pH-Wert von etwa 6,4 auf. Der normale isoelektrische Punkt von α-Aluminiumoxid liegt hingegen im Bereich pH 8 bis 9. Eine weitere Verschiebung des isoelektrischen Punkts (bis auf einen pH-Wert von 3) wurde durch Zugabe von Ammoniumcitrat (Fluka, Deutschland) erzielt.

Aluminiumoxiddispersionen wurden durch Zugabe der gewünschten Mengen an Pulver, entionisiertem Wasser und gegebenenfalls Ammoniumcitrat in eine Kugelmühle und anschließendes Mahlen für 30 Minuten hergestellt.

Viskositätsbestimmungen als Funktion der Scherungsrate wurden an einem Rheometrics Dynamic Stress Rheometer (DSR-500) durchgeführt.

Es wurde gefunden, daß bei Temperaturerhöhung z.B. auf 57°C eine signifikante Viskositätserhöhung verbunden mit einer pH-Änderung festgestellt wurde. Wenn der pH-Wert den isoelektrischen pH-Wert erreichte, wurde ein Grünkörper mit hervorragenden mechanischen Eigenschaften, z.B. Festigkeit, erhalten.

## Patentansprüche

1. Verfahren zur Herstellung eines festen Formkörpers aus pulverförmigen Teilchen umfassend die Schritte:
(a) Herstellen einer Dispersion von pulverförmigen Teilchen in einem wäßrigen fluiden Medium, wobei die Teilchen mit einem Dispergator beschichtet werden und einen temperaturabhängigen Ladungszustand aufweisen,
(b) gegebenenfalls Filtrieren der Dispersion zum Entfernen von Verunreinigungen,
(c) Überführen der Dispersion in eine Form,
(d) kontrolliertes Erwärmen zur Verfestigung der Masse in der Form,
(e) gegebenenfalls Entnehmen der verfestigten Masse aus der Form und
(f) gegebenenfalls Trocknen der Masse.

2. Verfahren nach Anspruch 1,
**dadurch gekennzeichnet,**
**daß** man einen Dispergator verwendet, mit dem ein kurzreichweitiges Abstoßungspotential an der Oberfläche eingestellt wird.

3. Verfahren nach einem der Ansprüche 1 - 2,
**dadurch gekennzeichnet,**
**daß** der Dispergator eine Größe von 0,2 nm bis 10 nm umfaßt.

4. Verfahren nach einem der Ansprüche 1 - 3,
**dadurch gekennzeichnet,**
**daß** der Dispergator ein temperaturabhängiges Löslichkeitsverhalten aufweist.

5. Verfahren nach einem der vorhergehenden Ansprüche,
**dadurch gekennzeichnet,**
**daß** man pulverförmige Keramik- oder/und Metallteilchen verwendet.

6. Verfahren nach einem der vorhergehenden Ansprüche,
**dadurch gekennzeichnet,**
**daß** das Herstellen der Dispersion in Schritt (a) durch Einwirkung von Scherkräften unterstützt wird.

7. Verfahren nach einem der vorhergehenden Ansprüche,
**dadurch gekennzeichnet,**
**daß** man den Dispergator in einem Anteil von 0,0001 bis 5 Gew.-% bezogen auf das Gewicht der pulverförmigen Teilchen einsetzt.

8. Verfahren nach Anspruch 7,
**dadurch gekennzeichnet,**
**daß** man den Dispergator in einem Anteil von 0,001 bis 2,5 Gew.-% einsetzt.

9. Verfahren nach Anspruch 4,
**dadurch gekennzeichnet,**
**daß** man einen Dispergator der allgemeinen Formel (I) verwendet:
A - R (I)
worin
A eine oder mehrere Ankergruppen bedeutet, die zur Anlagerung an die Oberfläche der Teilchen fähig sind,
R eine oder mehrere Stabilisatorgruppen bedeutet, die eine temperaturabhängige Löslichkeit in einem wäßrigen Medium aufweisen.

10. Verfahren nach Anspruch 9,
**dadurch gekennzeichnet,**
**daß** A eine Gruppe ausgewählt aus -OH, -I, -SO₃H, -PO₃H₂, Tosylat, Epoxid und einer Silicium enthaltenden Gruppe ist.

11. Verfahren nach Anspruch 10,
**dadurch gekennzeichnet,**
**daß** A eine Sificium enthaltende Gruppe bedeutet und man einen Dispergator der allgemeinen Formel (II) verwendet:
SiXYZ - R (II)
worin:
R wie in Anspruch 9 definiert ist und
X,Y und Z Substituenten an Si bedeuten, die vorzugsweise jeweils unabhängig ausgewählt sind aus: H, Halogen, OH, OR¹ und R¹, wobei R¹ ein gegebenenfalls substituierter Alkyl-, Alkenyl- oder Alkinylrest ist, mit der Maßgabe, daß mindestens einer der Subsituenten an Si von R¹ verschieden ist,
oder ein höheres Homologes einer Verbindung der Formel (II) verwendet.

12. Verfahren nach Anspruch 11,
**dadurch gekennzeichnet,**
**daß** R eine Gruppe bedeutet, die mindestens 2 C₂-C₄-Alkylenoxideinheiten umfaßt.

13. Verfahren nach Anspruch 12,
**dadurch gekennzeichnet,**
**daß** R mindestens 2 Ethylenoxid- oder/und Propylenoxideinheiten umfaßt.

14. Verfahren nach einem der Ansprüche 11-13,
**dadurch gekennzeichnet,**
**daß** R weiterhin mindestens eine Brönsted-Säure- oder/und eine Brönsted-Basengruppe umfaßt.

15. Verfahren nach Anspruch 14,
**dadurch gekennzeichnet,**
**daß** die Säure- oder/und Basengruppen ausgewählt werden aus -NR²-, -NR²-CO-, -N(R²)₂-, -CO-N(R²)₂- und -COOR³ Gruppen, worin R² H oder einen gegebenenfalls substituierten Alkyl-, Alkenyl- oder Alkinylrest bedeutet und R³ H oder ein Metall- oder Ammoniumkation bedeutet.

16. Verfahren nach einem der vorhergehenden Ansprüche,
**dadurch gekennzeichnet,**
**daß** man eine Dispersion herstellt, die weiterhin mindestens einen gelösten anorganischen Haftvermittler enthält, der während der Verfestigung oder/und der Trocknung abgeschieden wird.

17. Verfahren nach einem der vorhergehenden Ansprüche,
**dadurch gekennzeichnet,**
**daß** man in Schritt (a) anisotrope pulverförmige Teilchen verwendet.

18. Verfahren nach einem der vorhergehenden Ansprüche,
**dadurch gekennzeichnet,**
**daß** in Schritt (b) Verunreinigungen mit einem mittleren Durchmesser > 2 µm entfernt werden.

19. Verfahren nach einem der vorhergehenden Ansprüche,
**dadurch gekennzeichnet,**
**daß** in Schritt (c) das Überführen der Masse in eine Form durch Gießen erfolgt.

20. Verfahren nach einem der vorhergehenden Ansprüche,
**dadurch gekennzeichnet,**
**daß** in Schritt (c) eine nichtporöse Form verwendet wird.

21. Verfahren nach einem der vorhergehenden Ansprüche,
**dadurch gekennzeichnet,**
**daß** in Schritt (d) beim Erwärmen eine Erhöhung der Viskosität der Dispersion um mindestens den Faktor 10³ erfolgt.

22. Verfahren nach einem der vorhergehenden Ansprüche,
**dadurch gekennzeichnet,**
**daß** in Schritt (d) das Erwärmen eine Temperaturerhöhung um 20 bis 95°C umfaßt.

23. Verfahren nach einem der vorhergehenden Ansprüche, weiterhin umfassend einen Sinterschritt.

24. Verfahren nach Anspruch 23,
**dadurch gekennzeichnet,**
**daß** der Sinterschritt ohne vorherigen Ausbrennvorgang erfolgt.

25. Dispersion von pulverförmigen Teilchen in einem wäßrigen fluiden Medium,
**dadurch gekennzeichnet,**
**daß** sie weiterhin in einem Anteil von 0,0001 bis 5 Gew.-% bezogen auf das Gewicht der pulverförmigen Teilchen einen Dispergator enthält, der an die Oberfläche der Teilchen angelagert ist und ein temperaturabhängiges Löslichkeitverhalten aufweist.

26. Dispersion nach Anspruch 25,
**dadurch gekennzeichnet,**
**daß** die Teilchen einen mittleren Durchmesser < 2 µm aufweisen.

27. Dispersion nach Anspruch 25 oder 26,
**dadurch gekennzeichnet,**
**daß** sie weiterhin mindestens einen gelösten anorganischen Haftvermittler enthält.

28. Fester Formkörper aus pulverförmigen Teilchen erhältlich durch ein Verfahren nach einem der Ansprüche 1 bis 22,
**dadurch gekennzeichnet,**
**daß** er aus Teilchen besteht, an deren Oberfläche ein Dispergator angelagert ist, der ein temperaturabhängiges Löslichkeitsverhalten in einem wäßrigen Medium aufweist.

29. Formkörper nach Anspruch 28,
**dadurch gekennzeichnet,**
**daß** die Teilchen einen mittleren Durchmesser < 2 µm aufweisen.

30. Formkörper nach Anspruch 28 oder 29,
**dadurch gekennzeichnet,**
**daß** er eine Dichte von 40 bis 70 Vol.-% bezüglich der theoretisch erreichbaren Dichte aufweist.

31. Formkörper aus pulverförmigen Teilchen erhältlich durch ein Verfahren nach einem der Ansprüche 1 bis 22,
**dadurch gekennzeichnet,**
daßer kristallographisch orientierte anisotrope polykristalline Bereiche aufweist.

32. Formkörper nach Anspruch 31,
**dadurch gekennzeichnet,**
**daß** er im wesentlichen anisotrope Struktur aufweist.

## Claims

1. A method for producing a solid molded article made of pulverized particles and comprising the steps:
(a) preparation of a dispersion of pulverized particles in an aqueous fluid medium, the particles being coated with a dispersant and ex hibiting a temperature-dependent charge state;
(b) if necessary filtering the dispersion to remove impurities;
(c) transferring the dispersion to a mold:
(d) supplying controlled heat to solidify the molding compound pound in the mold;
(e) maybe demolding the solidified body, and
(f) maybe drying the body.

2. The method of claim 1,
**characterised in that**
a dispersant is used with which a short-range repulsive potential is established at the surface.

3. The method according to one of claims 1 to 2,
**characterised in that**
the dispersant is 0.2 to 10 nm in size.

4. The method according to one of claims 1 to 3,
**characterised in that**
the dispersant exhibits temperature-dependent solubility properties.

5. The method according to one of the preceding claims,
**characterised in that**
pulverized ceramic and/or metallic particles are used.

6. The method according to one of the preceding claims,
**characterised in that**
shear forces are used to assist in preparation of the dispersion in step (a).

7. The method according to one of the preceding claims,
**characterised in that**
the dispersant is used in a proportion of 0.0001 to 5 wt.%, expressed in terms of the weight of pulverized particles.

8. The method of claim 7,
**characterised in that**
the dispersant is used in a proportion of 0.001 to 2.5 wt.%.

9. The method of claim 4,
**characterised in that**
a dispersant is used which has the general formula (I):
A - R (I)
where
A stands for one or more anchoring groups which are capable of attaching to the surface of the particles, and
R stands for one or more stabilizing groups **characterized by** temperature-dependent solubility in an aqueous medium.

10. The method of claim 9,
**characterised in that**
A is a group selected from -OH, -I, SO₃H, -PO₃H₂, tosylate, epoxide, and a silicon-containing group.

11. The method of claim 10,
**characterised in that**
A is a silicon-containing group, and the dispersant used has the general formula (II):
SiXYZ-R (II)
where
R is defined as in claim 9, and
X, Y and Z are substituents on Si, which are preferably selected independently from: H, halogen, OH, OR¹ and R¹, where R¹ is an alkyl, alkenyl or alkinyl radical which may be substituted, a requirement being that at least one of the substituents on Si is different from R¹,
or else a higher homologue of a formula (II) compound is used.

12. The method of claim 11
**characterised in that**
R is a group comprising at least 2 C₂-C₄ alkylene oxide units.

13. The method of claim 12,
**characterised in that**
R comprises at least two ethylene oxide and/or propylene oxide units.

14. The method according to one of claims 11 to 13,
**characterised in that**
R additionally comprises at least one Brönsted acid and/or Brönsted base group.

15. The method of claim 14,
**characterised in that**
the acid and/or base groups are selected from are -NR²-, -NR²-CO-, -N(R²)₂, -CO-N(R²)₂- and COOR³ groups, where R² stands for H or an alkyl, alkenyl or alkinyl radical, which may be substituted, and R³ stands for H or a metal or ammonium cation.

16. The method according to one of the preceding claims,
**characterised in that**
a dispersion is prepared which, in addition, contains at least one dissolved inorganic adhesion promoter, this being precipitated during solidification and/or drying.

17. The method according to one of the preceding claims,
**characterised in that**
anisotropic pulverized particles are used in step (a).

18. The method according to one of the preceding claims,
**characterised in that**,
in step (b), impurities with a mean diameter > 2 µm are removed.

19. The method according to one of the preceding claims,
**characterised in that**
in step (c), the molding compound is transferred to a mold by pouring.

20. The method according to one of the preceding claims,
**characterised in that**
a non-porous mold is used in step (c).

21. The method according to one of the preceding claims,
**characterised in that**,
in step (d), the viscosity of the dispersion is raised by a factor of at least 10³ during heating.

22. The method according to one of the preceding claims,
**characterised in that**,
in step (d), heating results in a temperature increase of 20 to 95 °C.

23. The method according to one of the preceding claims, also comprising a sintering step.

24. The method of claim 23,
**characterised in that**
the sintering step is conducted without previous burnout.

25. The dispersion of pulverized particles in an aqueous fluid medium,
**characterised in that**
said dispersion contains 0.0001 to 5 wt.% dispersant, expressed in terms of the weight of the pulverized particles, which is attached to the surface of the particles and exhibits temperature-dependent solubility properties.

26. The dispersion of claim 25,
**characterised in that**
the particles exhibit a mean diameter of < 2 µm.

27. The dispersion of claim 25 or 26,
**characterised in that**
it also contains at least one dissolved inorganic adhesion promoter.

28. A solid molded article made of pulverized particles and obtained by a method according to one of claims 1 to 22,
**characterised in that**
said article consists of particles to the surface of which a dispersant is attached, which exhibits temperature-dependent solubility properties in an aqueous medium.

29. The molded article of claim 28,
**characterised in that**
the particles exhibit a mean diameter of < 2 µm.

30. The molded article according to claim 28 or 29,
**characterised in that**
said article has a density of 40 to 70 vol.%, expressed in terms of the theoretically achievable density.

31. A molded article made of pulverized particles and obtained by a method according to one of claims 1 to 22,
**characterised in that**
said article exhibits crystallographically oriented, anisotropic polycrystalline areas.

32. The molded article of claim 31,
**characterised in that**
it has an essentially anisotropic texture.

## Revendications

1. Procédé de fabrication d'un corps moulé solide en particules pulvérulentes comprenant les étapes de :
(a) production d'une dispersion de particules pulvérulentes dans un milieu fluide aqueux, où les particules sont revêtues d'un dispersant et présentent un état de charge dépendant de la température,
(b) éventuellement filtration de la dispersion pour retirer les impuretés,
(c) transfert de la dispersion dans un moule,
(d) chauffage contrôlé pour la solidification de la masse dans le moule,
(e) éventuellement retrait de la masse solidifiée du moule et
(f) éventuellement séchage de la masse.

2. Procédé selon la revendication 1 **caractérisé en ce que** l'on utilise un dispersant avec lequel un potentiel de répulsion à courte portée est établi sur la surface.

3. Procédé selon l'une des revendications 1-2 **caractérisé en ce que** le dispersant comprend une taille de 0,2 nm à 10 nm.

4. Procédé selon l'une des revendications 1-3 **caractérisé en ce que** le dispersant présente un comportement de solubilité dépendant de la température.

5. Procédé selon l'une des revendications précédentes **caractérisé en ce que** l'on utilise des particules céramiques et/ou métalliques pulvérulentes.

6. Procédé selon l'une des revendications précédentes **caractérisé en ce que** la production de la dispersion dans l'étape (a) est assistée par l'action de forces de cisaillement.

7. Procédé selon l'une des revendications précédentes **caractérisé en ce que** l'on utilise le dispersant en une proportion de 0,0001 à 5 % en masse par rapport à la masse des particules pulvérulentes.

8. Procédé selon la revendication 7 **caractérisé en ce que** l'on utilise le dispersant en une proportion de 0,001 à 2,5 % en masse.

9. Procédé, selon la revendication 4 **caractérisé en ce que** l'on utilise un dispersant de formule générale (I) :
A-R (I)
où
A représente un ou plusieurs groupes d'ancrage qui sont capables de se fixer à la surface des particules,
R représente un ou plusieurs groupes stabilisants qui présentent une solubilité dans un milieu aqueux qui dépend de la température.

10. Procédé selon la revendication 9 **caractérisé en ce que** A est un groupe choisi parmi -OH, -I, -SO₃H, -PO₃H₂, tosylate, époxyde et un groupe contenant du silicium.

11. Procédé selon la revendication 10 **caractérisé en ce que** A représente un groupe contenant du silicium et on utilise un dispersant de formule générale (II) :
SiXYZ-R (II)
où:
R est défini comme dans la revendication 9 et
X, Y et Z représentent des substituants sur Si qui sont de préférence choisis chacun indépendamment parmi : H, halogène, OH, OR¹ et R¹, où R¹ est un reste alkyle, alcényle ou alcynyle éventuellement substitué, à condition qu'au moins l'un des substituants sur Si soit différent de R¹,
ou un homologue supérieur d'un composé de formule (II).

12. Procédé selon la revendication 11 **caractérisé en ce que** R représente un groupe qui comprend au moins 2 unités d'oxyde d'alkylène en C₂-C₄.

13. Procédé selon la revendication 12 **caractérisé en ce que** R comprend au moins 2 unités d'oxyde d'éthylène et/ou d'oxyde de propylène.

14. Procédé selon l'une des revendications 11-13 **caractérisé en ce que** R comprend en outre au moins un groupe acide de Brönsted et/ou un groupe base de Brönsted.

15. Procédé selon la revendication 14 **caractérisé en ce que** les groupes acides et/ou bases sont choisis parmi les groupes -NR²-, -NR²-CO-,-N(R²)₂-, -CO-N(R²)₂- et -COOR³, où R² représente H ou un reste alkyle, alcényle ou alcynyle éventuellement substitué et R³ représente H ou un cation métallique ou ammonium.

16. Procédé selon l'une des revendications précédentes **caractérisé en ce que** l'on produit une dispersion qui contient en outre au moins un promoteur d'adhésion inorganique dissous qui est séparé pendant la solidification et/ou le séchage.

17. Procédé selon l'une des revendications précédentes **caractérisé en ce que** l'on utilise des particules pulvérulentes anisotropes dans l'étape (a).

18. Procédé selon l'une des revendications précédentes **caractérisé en ce que**, dans l'étape (b), les impuretés d'un diamètre moyen > 2 µm sont retirées.

19. Procédé selon l'une des revendications précédentes **caractérisé en ce que**, dans l'étape (c), le transfert de la masse dans un moule a lieu par coulée.

20. Procédé selon l'une des revendications précédentes **caractérisé en ce que**, dans l'étape (c), on utilise un moule non poreux.

21. Procédé selon l'une des revendications précédentes **caractérisé en ce que**, dans l'étape (d), il se produit lors du chauffage une augmentation de la viscosité de la dispersion d'au moins un facteur 10³.

22. Procédé selon l'une des revendications précédentes **caractérisé en ce que**, dans l'étape (d), le chauffage comprend une augmentation de la température de 20 à 95°C.

23. Procédé selon l'une des revendications précédentes comprenant en outre une étape de frittage.

24. Procédé selon la revendication 23 **caractérisé en ce que** l'étape de frittage a lieu sans processus de cuisson préalable.

25. Dispersion de particules pulvérulentes dans un milieu fluide aqueux **caractérisée en ce qu'**elle contient en outre en une proportion de 0,0001 à 5 % en masse par rapport à la masse des particules pulvérulentes un dispersant qui est fixé à la surface des particules et qui présente un comportement de solubilité dépendant de la température.

26. Dispersion selon la revendication 25 **caractérisée en ce que** les particules présentent un diamètre moyen < 2 µm.

27. Dispersion selon la revendication 25 ou 26 **caractérisée en ce qu'**elle contient en outre au moins un promoteur d'adhésion inorganique dissous.

28. Corps moulé solide en particules pulvérulentes pouvant être obtenu par un procédé selon l'une des revendications 1 à 22 **caractérisé en ce qu'**il consiste en particules à la surface desquelles est fixé un dispersant qui présente un comportement de solubilité dans un milieu aqueux qui dépend de la température.

29. Corps moulé selon la revendication 28 **caractérisé en ce que** les particules présentent un diamètre moyen < 2 µm.

30. Corps moulé selon la revendication 28 ou 29 **caractérisé en ce qu'**il présente une densité de 40 à 70 vol% par rapport à la densité qui peut être atteinte théoriquement.

31. Corps moulé en particules pulvérulentes pouvant être obtenu par un procédé selon l'une des revendications 1 à 22 **caractérisé en ce qu'**il présente des domaines polycristallins anisotropes orientés cristallographiquement.

32. Corps moulé selon la revendication 31 **caractérisé en ce qu'**il présente une structure sensiblement anisotrope.
